# EUROPÄISCHE PATENTANMELDUNG

(11) **EP 0 840 313 A1**
(43) Veröffentlichungstag der Anmeldung: **06.05.1998**
(21) Anmeldenummer: 97118125.0
(22) Anmeldetag: 19.05.1995
(51) Int. Cl.: G11B 17/22

(54) **Wiedergabe- und/oder Aufzeichnungsgerät und/oder Ausgabegerät für als Informationsträger ausgebildete Platten**

(30) Priorität: 24.05.1994 DE 4418116
(62) Teilanmeldung aus: 95920729.1
(71) Anmelder: NSM AKTIENGESELLSCHAFT, 55411 Bingen (DE)
(72) Erfinder: Menke, Wilhelm, 55411 Bingen (DE); Heidersberger, Börge, 55411 Bingen (DE)
(74) Vertreter: Becker, Bernd, Dipl.-Ing.

(57) **Zusammenfassung**

Bei einem Wiedergabe- und/oder Aufzeichnungs- und/oder Ausgabegerät für Platten (1) mit gegenüberliegenden Plattenmagazinen (4), ist zwischen den Plattenmagazinen (4) eine Transporteinrichtung (10) zur Hin- und Herbeförderung eines Plattenhalters (7) mit der Platte (1) zwischen den Plattenmagazinen (4), zwischen einem Plattenmagazin (4) und einem Laufwerk (5) oder zwischen einem Plattenmagazin (4) oder einem Laufwerk (5) und einem Platten-Lade-/Ausgabe-Schubfach (11) angeordnet. Auf der Transporteinrichtung (10) befinden sich zwei horizontal verfahrbare Auszugeinrichtungen (9). Es soll das Handling der Platten (1) in den Plattenhaltern (7) und der Plattenhalter (7) im Plattenmagazin (4) verbessert und dabei äußerst kurze Verfahrwege der Auszugeinrichtungen (9) für sämtliche möglichen Beförderungswege eines Plattenhalters (7) mit einer Platte (1) gewährleistet werden kann. Dazu ist der Freiraum zwischen den Plattenhaltern in jedem Plattenmagazin kleiner als die Dicke einer Platte ausgebildet.

## Beschreibung

Die Erfindung bezieht sich auf ein Wiedergabe- und/oder Aufzeichnungs- und/oder Ausgabegerät für als Informationsträger ausgebildete Platten, insbesondere CD-Platten, mit
- gegenüberliegenden Plattenmagazinen, die in horizontal übereinanderliegenden Aufnahmefächern Plattenhalter für mindestens eine Platte aufnehmen,
- einer zwischen den Plattenmagazinen angeordneten, rechnergesteuerten Transporteinrichtung zur wahlweisen Hin- und Herbeförderung eines einzelnen Plattenhalters mit der Platte zwischen beliebigen Aufnahmefächern, zwischen einem Aufnahmefach und mindestens einem Laufwerk zum Auslesen oder Einschreiben von Informationen von der bzw. auf die Platte oder zwischen einem Aufnahmefach oder einem Laufwerk und einem Platten-Lade/Ausgabe-Schubfach, und
- zwei auf der Transporteinrichtung horizontal verfahrbaren Auszugeinrichtungen für die Plattenhalter.

Aus der EP 0 138 005 B1 ist eine Plattenwechselvorrichtung bekannt, bei der zwischen zwei vertikalen, Plattenhüllen mit Platten speichernden Plattenmagazinen eine vertikal verfahrbare Plattenentnahmevorrichtung angeordnet ist, die einen auf dieser horizontal verfahrbaren Plattenhüllengreifer trägt. Dieser Plattenhüllengreifer ist mit zwei Greifeinrichtungen versehen, von denen sich wahlweise eine in ihrer Bereitschaftsposition in dem linken oder rechten Plattenmagazin befindet, während die andere Greifeinrichtung eine entnommene Plattenhülle in der Mittenposition hält, in der sich die Platte oberhalb des Plattentellers des Abspielgerätes befindet. Sonach kann immer nur eine Greifeinrichtung des Plattenhüllengreifers eine Bereitschaftsposition zur Herausnahme einer Plattenhülle aus dem zugeordneten Plattenmagazin einnehmen, d.h. wenn eine Plattenhülle aus dem anderen Plattenmagazin entnommen werden soll, dann muß zunächst der Plattenhüllengreifer in Richtung dieses Plattenmagazins verfahren werden, um die andere Greifeinrichtung in eine Bereitschaftsposition zur Herausnahme einer Plattenhülle aus dem ihr zugeordneten Plattenmagazin zu bringen, was einen zusätzlichen Verfahrweg des Plattenhüllengreifers darstellt, der die Transportzeit der die gewünschte Platte enthaltenden Plattenhülle von dem Plattenmagazin zu dem Plattenteller der Abspieleinheit erhöht.

Weiterhin offenbart die EP 0 280 263 A2 ein Plattenabspielgerät, bei dem die Platten in zwei Stapeln abgelegt werden und in zwei Abspielstationen abgespielt werden können. Die einzelnen Platten können von zwei Seiten abgespielt werden. Sie werden nach dem Abspielen nicht mehr in denselben Stapel zurückgelegt. Bei diesem Gerät ist ein unendliches Förderband als Auszugeinrichtung ausgebildet. Damit kann eine Platte ohne Wartezeit aus einem der beiden Magazine entnommen werden. Die Stellung der Auszugeinrichtung kann bei diesem Gerät nicht zur Kontrolle der Plattenposition herangezogen werden. Bei geringsten Unregelmäßigkeiten im Transport der Platten, beispielsweise bei der Abgabe der Platten aus dem Abspielgerät oder durch Erschütterungen der Anlage, sind daher empfindliche Störungen des Betriebes zu erwarten, die nicht hingenommen werden können.

Ferner zeigt die EP 0 439 483 B1 ein Plattenabspielgerät mit zwei einander gegenüberliegenden Plattenmagazinen mit einer in Stapelrichtung der Plattenmagazine bewegbaren Transporteinrichtung zur Hin- und Herbeförderung eines Plattenhalters mit einer Platte zwischen den Plattenmagazinen und einer Abspieleinheit und mit zwei unabhängig voneinander steuerbaren, auf der Transporteinrichtung horizontal verfahrbaren Auszugeinrichtungen mit jeweils einem ein- und ausfahrbaren Greifarm. Die unabhängig voneinander verfahrbaren Auszugeinrichtungen befinden sich jeweils in einer Bereitschaftsposition zur Herausnahme eines in dem zugeordneten Plattenmagazin vorhandenen Plattenhalters für eine Platte, oder die eine Auszugeinrichtung ist in eine Mittenposition gefahren, in der sie die aus dem zugehörigen Plattenmagazin entnommene Platte mit dem Plattenhalter konzentrisch zu dem Plattenteller der Abspieleinheit fixiert, während die andere Auszugeinrichtung in ihre Bereitschaftsposition für das andere Plattenmagazin verbleibt. Hieraus resultiert zwar ein relativ kurzer Beförderungsweg für eine einzelne Platte bzw. den zugehörigen Plattenhalter, jedoch muß beim Durchwechseln eines Plattenhalters von einem Plattenmagazin zum anderen Plattenmagazin die den Plattenhalter in die Mittenposition gebrachte Auszugeinrichtung in ihre Bereitschaftsposition zurückgefahren und die andere Auszugeinrichtung in die Mittenposition gefahren werden, welche dann erst den Plattenhalter in das andere Magazin befördern kann. Dies bedingt einen entsprechenden Zeitverlust.

Schließlich offenbart die WO-A-93/11 535 ein Wiedergabe- und/oder Aufzeichnungs- und/oder Ausgabegerät für als Informationsträger ausgebildete Platten, das zwei Plattenmagazine für Plattenhalter, eine Transporteinrichtung mit zwei horizontal verfahrbaren Auszugseinrichtungen, ein Laufwerk und ein Platten-Lade/Ausgabe-Schubfach enthält. Die Auszugseinrichtungen können jeweils wahlweise sowohl in der Bereitschaftsposition als auch in der Transporteinrichtungsposition in eine Eingriffsposition mit dem Plattenhalter gebracht werden.

Der Erfindung liegt die Aufgabe zugrunde, ein Wiedergabe- und/oder Aufzeichnungs- und/oder Ausgabegerät für als Informationsträger ausgebildete Platten der eingangs genannten Art zu schaffen, mit dem das Handling der Platten in den Plattenhaltern und der Plattenhalter im Plattenmagazin verbessert und dabei äußerst kurze Verfahrwege der Auszugeinrichtungen für sämtliche möglichen Beförderungswege eines Plattenhalters mit einer Platte gewährleistet werden kann.

Diese Aufgabe wird erfindungsgemäß dadurch gelöst, daß der Freiraum zwischen den Plattenhaltern in jedem Plattenmagazin kleiner als die Dicke einer Platte ist. Durch diese Maßnahme wird die Lagesicherung der Platten in den Plattenhaltern innerhalb der Plattenmagazine erhöht. Hierdurch ist praktisch ein Herausgleiten der Platten aus den Plattenhaltern nicht möglich. Zwecks Erzielung eines kompakten Plattenmagazins ist weiterhin bevorzugt die Dicke eines jeden Plattenhalters nur geringfügig größer als die Dicke einer Platte.

Damit der Plattenhalter auf einfache Weise von den Auszugeinrichtungen der Transporteinrichtung erfaßbar ist, besitzt nach einer vorteilhaften Ausgestaltung der Erfindung der Plattenhalter an seinen Längsseiten jeweils im vorderen Bereich eine Ausnehmung und entsprechend der Lage des Plattenhalters im Aufnahmefach des jeweiligen Plattenmagazins bzw. in der Transporteinrichtung ist der Greifarm der entsprechenden Auszugeinrichtung mit einer dieser Ausnehmungen in Eingriff bringbar.

Der der Erfindung zugrundeliegende Gedanke wird in der nachfolgenden Beschreibung anhand eines Ausführungsbeispieles, das in der Zeichnung dargestellt ist, näher erläutert. Es zeigt:

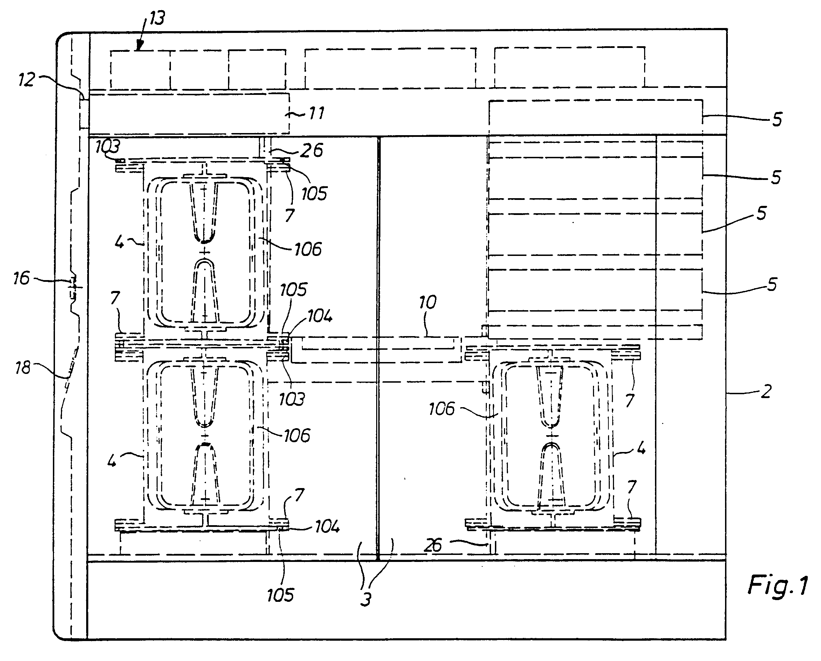

- Fig. 1: eine Vorderansicht eines Wiedergabe-Aufzeichnungs- und Ausgabegerätes für Platten nach der Erfindung,

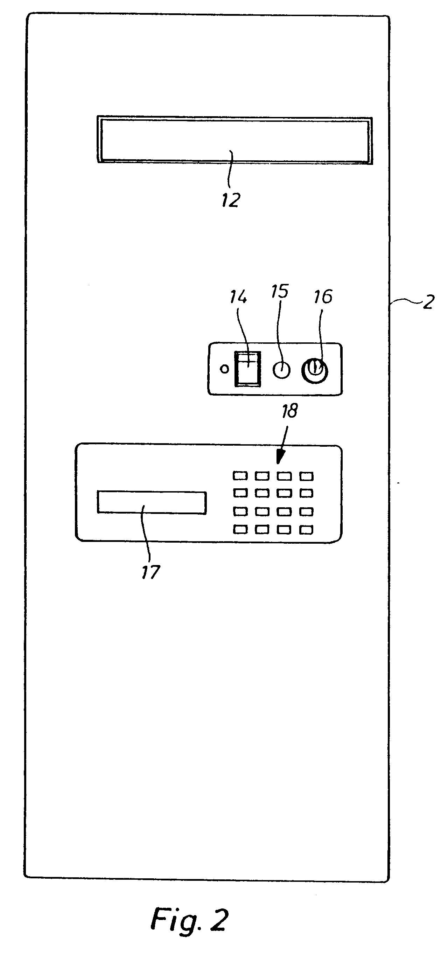

- Fig. 2: eine Seitenansicht des Gerätes nach Fig. 1
- Fig. 3a bis 3c: jeweils einen Querschnitt durch das Gerät nach Fig. 1 mit unterschiedlichen Funktionsstellungen der Auszugeinrichtungen der Transporteinrichtung für einen Plattenhalter,

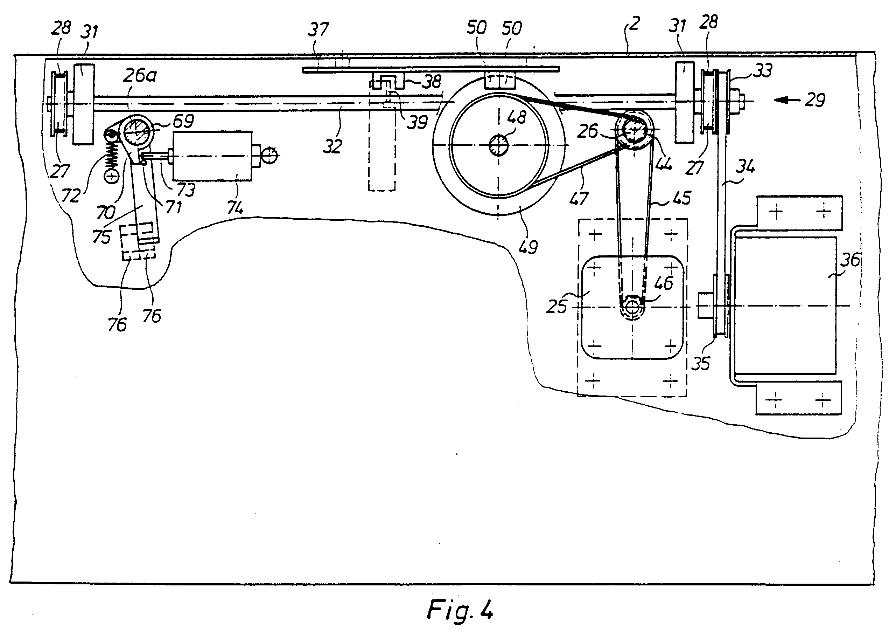

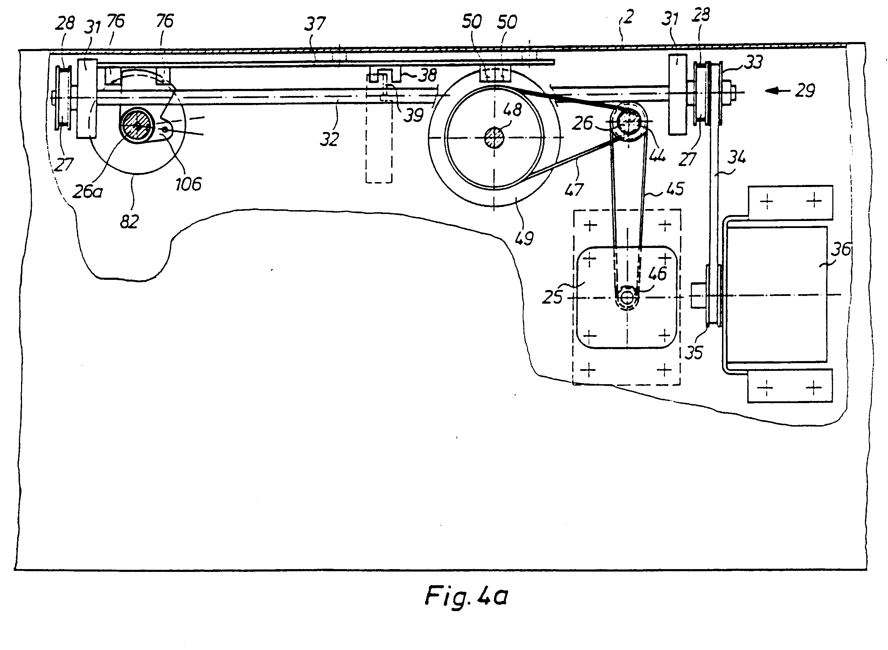

- Fig. 4: eine teilweise aufgeschnittene Unteransicht des Gerätes nach Fig. 1,
- Fig. 4a: eine alternative Ausführung der Darstellung nach Fig. 4,

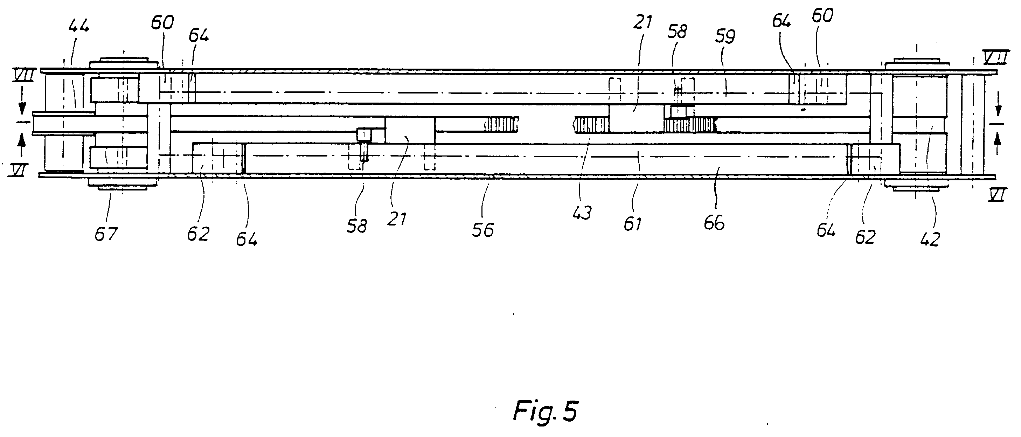

- Fig. 5: eine Rückansicht der Transporteinrichtung der Darstellung nach Fig. 3a, jedoch mit anderer Funktionsstellung der Auszugeinrichtungen,

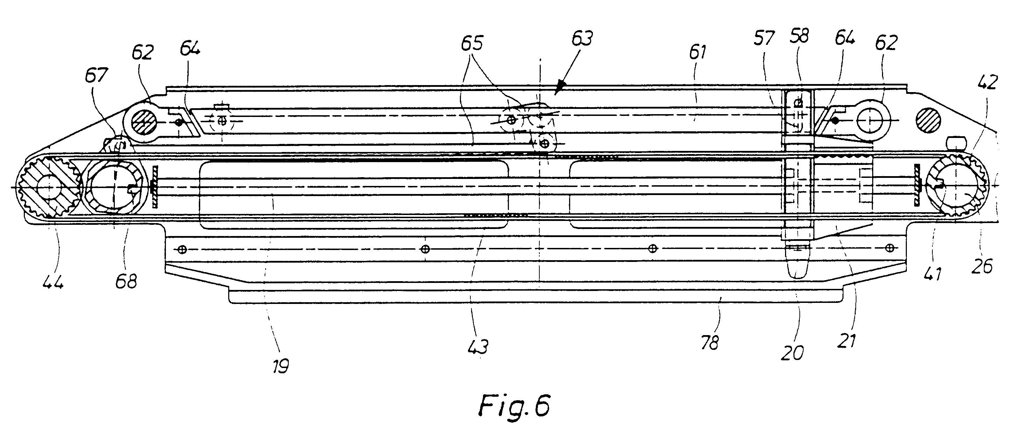

- Fig. 6: einen Schnitt durch die Darstellung nach Fig. 5 gemäß der Linie VI-VI, jedoch in anderer Funktionsstellung,

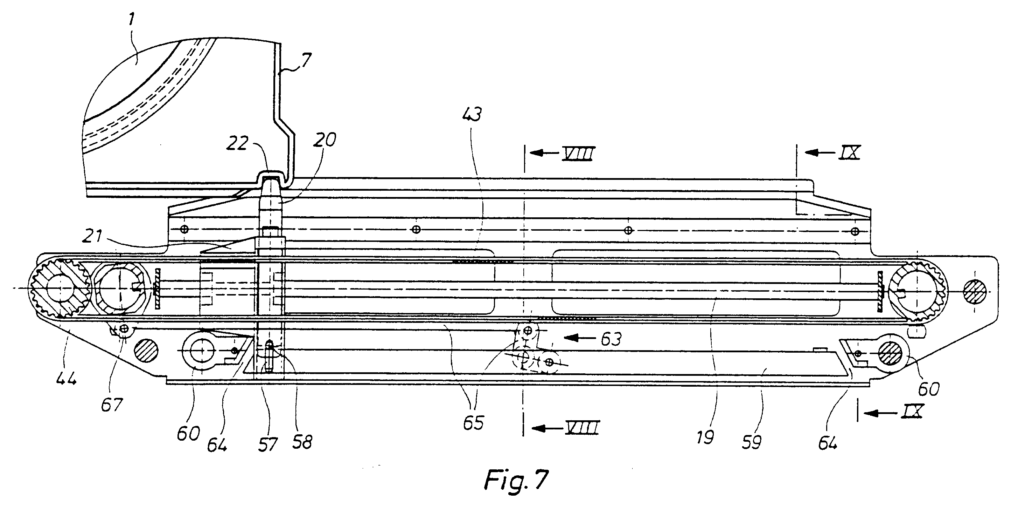

- Fig. 7: einen Schnitt durch die Darstellung nach Fig. 5 gemäß der Linie VII-VII, jedoch in anderer Funktionsstellung der Auszugeinrichtungen,

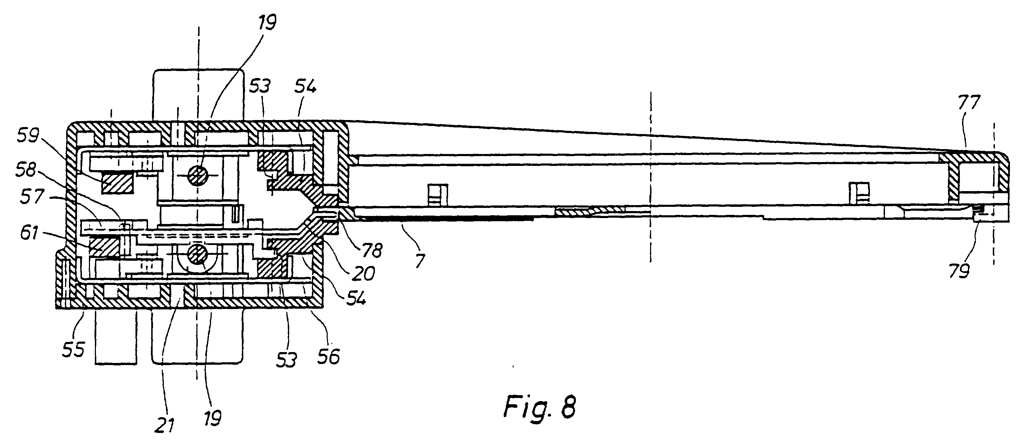

- Fig. 8: einen Schnitt durch die Darstellung nach Fig. 7 gemäß der Linie VIII-VIII,

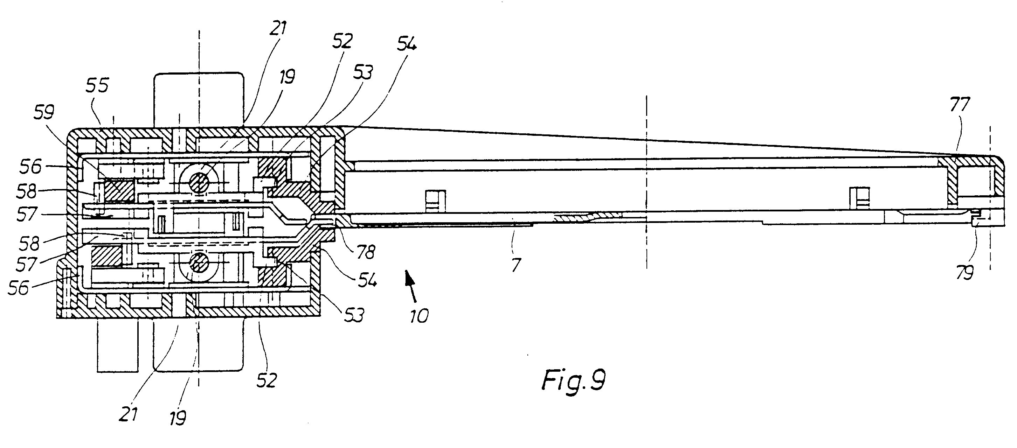

- Fig. 9: einen Schnitt durch die Darstellung nach Fig. 7 gemäß der Linie IX-IX,
- Fig. 10a bis Fig. 10g: Prinzip-Darstellungen der Funktionsstellungen der Auszugeinrichtungen der Transporteinrichtung beim Durchwechseln eines Plattenhalters mit einer Platte vom rechten Plattenmagazin zum linken Plattenmagazin,
- Fig. 11a bis 11e: Prinzip-Darstellungen alternativer Funktionsstellungen der Auszugeinrichtungen der Transporteinrichtung beim Durchwechseln eines Plattenhalters mit einer Platte vom rechten Plattenmagazin zum linken Plattenmagazin und
- Fig. 12: einen vergrößerten Teilschnitt durch ein Plattenmagazin der Fig. 1.

Das Wiedergabe-/Aufzeichnungs- und Ausgabegerät für Platten 1 besitzt ein Gehäuse 2 mit einer an der Vorderseite angebrachten Doppel-Tür 3. Seitlich im unteren Bereich des Gehäuses 2 sind zwei gegenüberliegende Plattenmagazine 4 angeordnet. Oberhalb des linken Plattenmagazins 4 befindet sich ein weiteres auswechselbares Plattenmagazin 4, während oberhalb des rechten Plattenmagazins 4 ein Turm aus vier auswechselbaren Laufwerken 5 vorgesehen ist. Die Laufwerke 5 dienen zum Auslesen oder Einschreiben von Informationen von einer bzw. auf eine Platte 1.

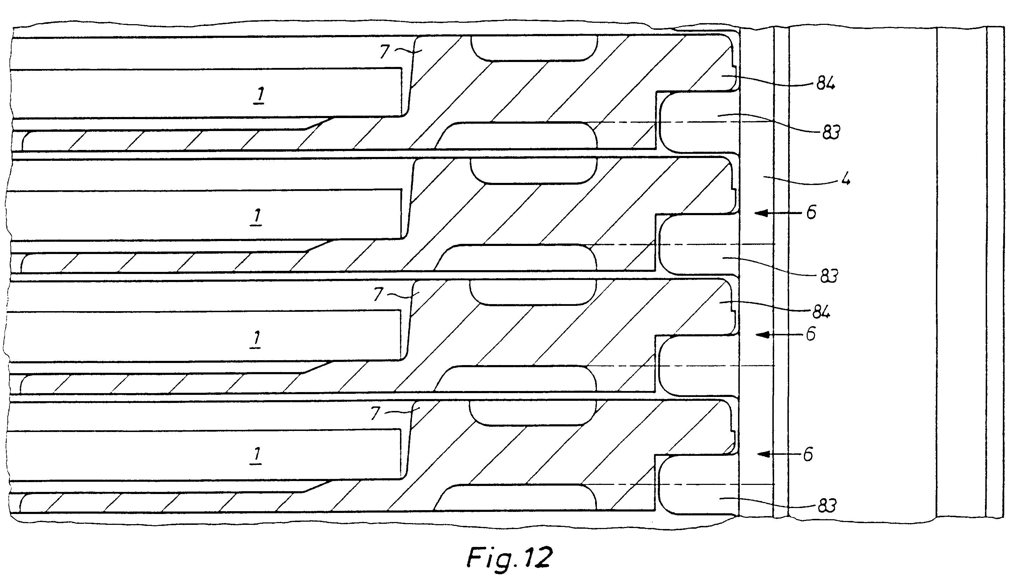

Die untereinander identisch aufgebauten Plattenmagazine 4 weisen jeweils eine Vielzahl übereinanderliegend angeordneter Aufnahmefächer 6 für die Lagerung einer entsprechenden Anzahl an je eine Platte 1 aufnehmender Plattenhalter 7 auf. Jedem Aufnahmefach 6 sind insbesondere gemäß Fig. 12 zwei gegenüberliegende Gleitschienen 83 zugeordnet, auf denen der Plattenhalter 7 mit randseitigen Schultern 84 aufliegt. Der Freiraum zwischen den Plattenhaltern 7 ist hierbei kleiner als die Dicke der in den Plattenhalter 7 eingelegten Platte 1. Weiterhin ist die Dicke des Plattenhalters 7 nur geringfügig größer als die Dicke der Platte 1. Die Platte 1 hat eine Dicke von ca. 1,2 mm und der Plattenhalter 7 eine Dicke von etwa 2,8 mm. Dadurch wird eine äußerst geringe Höhe für ein Plattenmagazin 4 mit fünfzig übereinandergestapelten Plattenhaltern 7 erreicht. In dem Aufnahmefach 6 ist der Plattenhalter 7 durch zwei gegenüberliegende am Plattenmagazin 4 angebrachte Federelemente 8 in seiner Lage gesichert. In dieser Lage steht der Plattenhalter 7 durch Freimachung der entsprechenden Seitenwand des Plattenmagazins 4 soweit über der Auszugseite des Plattenmagazins 4 vor, daß er von einer der beiden Auszugeinrichtungen 9 einer in dem Raum zwischen den Plattenmagazinen 4 und den Laufwerken 5 auf- und abverfahrbaren Transporteinrichtung 10 für den eine Platte 1 aufnehmenden Plattenhalter 7 erfaßt werden kann. Oberhalb der beiden linken Plattenmagazine 4 befindet sich ein Platten-Lade-/Ausgabe-Schubfach 11, dem seitlich ein Ein-/Ausgabeschacht 12 für einen Plattenhalter 7 mit einer Platte 1 zugeordnet und das ebenfalls von der Transporteinrichtung 10 bedienbar ist. In der ausgefahrenen Stellung des Platten-Lade-/Ausgabe-Schubfaches verbleibt der Plattenhalter 7 zwangsgesteuert in dem Schubfach 11, d.h. bei einer Ein- oder Ausgabe einer Platte 1 in das Schubfach 11 kann der Plattenhalter 7 nicht aus diesem entnommen werden. Sämtliche Funktionen des Gerätes werden über eine oberhalb des Platten-Lade-/Ausgabe-Schubfaches 11 angeordnete interne Rechnereinheit 13 gesteuert, die mit einem Ein-/Ausschalter 14, einem Türöffner 15, einem Schlüsselschalter 16, einem Display 17 und einem Bedientasten-Tableau 18 verbunden ist. Der interne Rechner 13 steuert und überwacht das gesamte Gerät und führt die Kommunikation mit dem externen Rechner durch.

Die beiden horizontal auf der Transporteinrichtung 10 verfahrbaren Auszugeinrichtungen 9 sind gleichzeitig relativ zueinander gegenläufig sich kreuzend bewegbar und zwar zwischen einer Bereitschaftsposition zur Herausnahme eines bestimmten Plattenhalters 7 mit der gewünschten Platte 1 aus dem entsprechenden Plattenmagazin 4 bzw. dem entsprechenden Laufwerk 5 bzw. aus dem Platten-Lade-/Ausgabe-Schubfach 11 und einer Transporteinrichtungsposition zur Herausnahme des Plattenhalters 7 aus der Transporteinrichtung 10. Sowohl in der Bereitschaftsposition als auch in der Transporteinrichtungsposition stehen beide Auszugeinrichtungen 9 nicht mit dem Plattenhalter 7 in Eingriff. In diesen Positionen können die Auszugeinrichtungen 9 jedoch jeweils wahlweise in eine Eingriffposition mit dem Plattenhalter 7 gebracht werden. Jede Auszugeinrichtung 9 umfaßt einen gleitbeweglich auf einer horizintalen Tragstange 19 geführten, mit einem ein- und ausfahrbaren Greifschieber 20 für einen Plattenhalter 7 versehenen Schlitten 21. Der Plattenhalter 7 besitzt an seinen Längsseiten jeweils im vorderen Bereich eine Ausnehmung 22, in die entsprechend der Lage des Plattenhalters 7 im Aufnahmefach 6 des jeweiligen Plattenmagazins 4 bzw. in der Transporteinrichtung 10 der Greifschieber 20 des entsprechenden Schlittens 21 eingreifen kann. Mit den Ausnehmungen 22 der in das Plattenmagazin 4 eingesetzten Plattenhalter 7 fluchten in die Deckenwand 103 und in die Bodenwand 104 eingelassene Einschnitte 105. Der dem rechten Plattenmagazin 4 zugeordnete Schlitten 21 ist an dem Vordertrum 23 und der dem linken Plattenmagazin 4 zugeordnete Schlitten 21 an dem Hintertrum 24 eines mit einem drehrichtungsumkehrbaren Antriebsmotor 25 gekoppelten Riementriebs 40 befestigt. Jedes Plattenmagazin 4 ist an der Vorderseite mit einem Tragbügel 106 versehen.

Im hinteren Bereich des Gehäuses 2 befinden sich zwei parallel zueinander und vertikal verlaufende Führungsstangen 26, 26a, auf denen die Transporteinrichtung 10 gleitbeweglich gelagert ist. Jeder Führungsstange 26, 26a ist seitlich ein parallel dazu verlaufender, über Umlenkrollen 27 geführter Riemen 28 eines Riementriebs 29 zugeordnet, wobei jeder Riemen 28 über eine Klemmhalterung 30 mit der Transporteinrichtung 10 verbunden ist. Die unteren Umlenkrollen 27 sind über eine in Lagern 31 aufgenommene Achse 32 miteinander gekoppelt. Die Achse 32 trägt eine weitere Umlenkrolle 33 für einen Riemen 34, der mit dem Antriebsrad 35 eines drehrichtungsumkehrbaren Antriebsmotors 36 verbunden ist. Zur Feststellung der unteren Ausgangssstellung der Transporteinrichtung 10 ist dieser ein auf einer Leiterplatte 37 angeordneter, als Gabelkoppler ausgebildeter Sensor 38 zugeordnet, in den in der unteren Stellung der Transporteinrichtung 10 ein an der Unterseite der Transporteinrichtung angebrachter Steg 39 eingreift. Beide Führungsstangen 26, 26a der Transporteinrichtung 10 sind drehbeweglich gelagert. Auf der rechten Führungsstange 26 ist mittels einer Nut-Feder-Führung 41 ein Zahnrad 42 verschiebbar und drehfest angeordnet, das mit dem Zahnriemen 43 des an die Schlitten 21 gekoppelten Riementriebs 40 verbunden ist. Diesem Zahnrad 42 liegt ein auf der Transporteinrichtung 10 ortsfest gelagertes Zahnrad 44 gegenüber, das als Umlenkrolle für den Zahnriemen 43 dient. Am unteren Ende trägt die rechte Führungsstange 26 ein drehfestes Zahnrad 44 für einen weiteren Riementrieb 45, der mit dem Antriebsrad 46 des drehrichtungsumkehrbaren Antriebsmotors 25 zusammenwirkt. Weiterhin ist die rechte Führungsstange 26 am unteren Ende über einen weiteren Riementrieb 47 mit einer auf einer Achse 48 gelagerten Kodescheibe 49 verbunden, der zwei als Gabelkoppler ausgebildete und auf der Leiterplatte 37 befestigte Sensoren 50 zugeordnet sind. Mit Hilfe dieser Positionsimpulse erzeugenden Sensoren 50 kann die Bereitschaftsposition und die Transporteinrichtungsposition der Schlitten 21 überwacht werden.

Die Ein- und Ausfahrbewegung der Greifschieber 20 der Schlitten 21 wird über eine umschaltbare Kulissensteuerung 51 gesteuert. Die Kulissensteuerung 51 ist so ausgelegt, daß bei einer gegenläufigen Bewegung der Schlitten 21 aus der Bereitschaftsposition oder aus der Transporteinrichtungsposition wahlweise der Greifschieber 20 des rechten oder des linken Schlittens 21 zwangsweise in die Eingriffposition mit dem Plattenhalter 7 übergeht. Die Greifschieber 20 sind im vorderen Bereich gegensinnig zueinander abgekröpft. Aufgrund dieser Abkröpfung können bei einer gegenläufigen sich kreuzenden Bewegung der Schlitten 21, bei der aufgrund der Kulissensteuerung 51 immer ein Greifschieber 20 in der ausgefahrenen Stellung ist, die vorderen Bereiche der Greifschieber 20 in einer Ebene aneinandervorbeifahren, d.h. ein ausgefahrener Greifschieber 20 transportiert mit seinem vorderen Bereich einen Plattenhalter 7, während der vordere Bereich des anderen eingefahrenen Greifschiebers 20 sich gegenläufig hinter dem vorderen Bereich des ausgefahrenen Greifschiebers 20 bewegt. Jeder auf einer von zwei in einer Ebene übereinanderliegenden Tragstangen 19 gelagerte Schlitten 21 greift mit einer an der Vorderseite vorspringenden Nase 52 gleitbeweglich in eine ortsfeste Führungsnut 53 ein, die jeweils in einem Einsatzteil 54 eines im Gehäuse 55 der Transporteinrichtung 10 untergebrachten Chassis 56 ausgebildet ist. Endseitig ist an den Greifschiebern 20 der Schlitten 21 jeweils ein in einem Langloch 57 des zugehörigen Schlittens 21 gleitbeweglich geführter Zapfen 58 zur Begrenzung der Ein- und Ausfahrbewegung des Greifschiebers 20 befestigt. Der Zapfen 58 des Greifschiebers 20 des oberen Schlittens 21 wirkt mit einer verstellbaren oberen Leitschiene 59 sowie endseitig dazu ortsfest angeordneten Rampen 60 zusammen. In analoger Weise steht der Zapfen 58 des Greifschiebers 20 des unteren Schlittens 21 mit einer verstellbaren unteren Leitschiene 61 sowie endseitig dazu ortsfest angeordneten Rampen 62 in Wirkverbindung. Die der oberen Leitschiene 59 rechtsseitig zugeordnete Rampe 60 bestimmt die Bereitschaftsposition des Greifschiebers 20 des oberen Schlittens 21 zur Herausnahme eines Plattenhalters 7 aus dem rechten Plattenmagazin 4. Entsprechend bestimmt die der unteren Leitschiene 61 linksseitig zugeordnete Rampe 62 die Bereitschaftsposition des Greifschiebers 20 des unteren Schlittens 21 zur Herausnahme eines Plattenhalters 7 aus dem linken Plattenmagazin 4. Weiterhin bestimmt in analoger Weise die der oberen Leitschiene 59 linksseitig zugeordnete Rampe 60 die Transporteinrichtungsposition eines aus dem rechten Plattenmagazin 4 herausgefahrenen Plattenhalters 7 in der Transporteinrichtung und die der unteren Leitschiene 61 rechtsseitig zugeordnete Rampe 62 die Transporteinrichtungsposition eines aus dem linken Plattenmagazin 4 herausgefahrenen Plattenhalters 7 in der Transporteinrichtung 10.

Beide Leitschienen 59, 61 sind über ein angetriebenes Hebelgestänge 63 gleichzeitig parallel zueinander von einer Endposition in die andere verfahrbar, wobei entweder die obere oder die untere Leitschiene 59 bzw. 61 Durchgangsschlitze 64 zwischen derselben und den zugehörigen Rampen 60 bzw. 62 für den Zapfen 58 des oberen bzw. des unteren Schlittens 21 freigibt, d.h. wenn die der oberen Leitschiene 59 zugeordneten Durchgangsschlitze 64 offen sind, dann sind die der unteren Leitschiene 61 zugeordneten Durchgangsschlitze 64 geschlossen oder umgekehrt. Die Durchgangsschlitze 64 sind so ausgebildet, daß sie durch entsprechende Führung des Zapfens 58 des Greifschiebers 20 des zugehörigen Schlittens 21 in Abhängigkeit von der Bewegungsrichtung des Riementriebes 40 der Schlitten 21 den Greifschieber 20 in eine Eingriffposition oder in eine Nicht-Eingriffposition mit dem Plattenhalter 7 überleiten. Hierbei gleitet in der Eingriffposition des Greifschiebers 20 des oberen Schlittens 21 der Zapfen 58 dieses Greifschiebers 20 an der Innenseite der oberen Leitschiene 59 und gleichzeitig der Zapfen 58 des sich nicht in der Eingriffposition befindlichen Greifschiebers 20 des unteren Schlittens 21 an der Außenseite der unteren Leitschiene 61 entlang. Dementsprechend gleitet in der Eingriffposition des Greifschiebers 20 des unteren Schlittens 21 bei einer Bewegung des Riementriebes 40 der Schlitten 21 der Zapfen 58 dieses Greifschiebers 20 an der Innenseite der unteren Leitschiene 61 und gleichzeitig der Zapfen 58 des sich nicht in der Eingriffposition befindlichen Greifschiebers 20 des oberen Schlittens 21 an der Außenseite der oberen Leitschiene 59 entlang.

Das mit dem Leitschienen 59, 61 verbundene Hebelgestänge 63 umfaßt einen oberen, mit der oberen Leitschiene 59 verbundenen Hebeltrieb 65 und einen unteren, mit der unteren Leitschiene 61 verbundenen Hebeltrieb 66. Beide Hebeltriebe 65, 66 sind mit einem gemeinsamen Umschalthebel 67 verbunden, der mittels einer Nut-Feder-Führung 68 drehfest und verschiebbar auf der linken drehbeweglichen Führungsstange 26a der Transporteinrichtung 10 gelagert ist. Am unteren Ende der linken Führungsstange 26a befindet sich ein Klemmring 69 mir einer vorstehenden Nase 70, der ein ortsfester Anschlag 71 zugeordnet ist. Ferner steht der Klemmring 69 mit einer als Zugfeder ausgebildeten Rückhohlfeder 72 in Verbindung. Die Nase 70 des Klemmringes 69 ist durch den Anker 73 eines Elektromagneten 74 beaufschlagt. Dem Anker 73 des Elektromagneten 74 ist auf der anderen Seite ein Anschlag 75 zugeordnet. Mittels des Elektromagneten 74 und der Rückhohlfeder 72 kann die linke Führungsstange 26a in unterschiedlichen Richtungen verdreht werden, wobei eine entsprechende Verschwenkung des Umschalthebels 67 und damit eine begrenzte gegenläufige Parallel-Bewegung der Leitschienen 59, 61 erfolgt. Im Bereich des Klemmringes 69 trägt die linke Führungsstange 26a drehfest einen abgewinkelten Hebel 75, der entsprechend der Stellung des Ankers 73 des Elektromagneten 74 in einen von zwei nebeneinanderliegenden, als Gabelkoppler ausgebildeten Sensoren 76 zur Überwachung der Drehrichtungsendstellungen der linken Führungsstange 26a eingreift. Anstelle des Verdrehantriebs der Führungsstange 26a mittels des Elektromagneten 74 und der Rückhohlfeder 72 kann auch ein Verdrehantrieb verwendet werden, der einen mit der Führungsstange 26a gekoppelten Antriebsmotor 82 umfaßt. In diesem Falle steht die Führungsstange 26a drehfest mit einer Lasche 106 in Verbindung, die entsprechend in die Sensoren 76 eintaucht.

Am Gehäuse 55 der Transporteinrichtung 10 befindet sich ein rechteckförmiger Tragarm 77 zur Aufnahme eines Plattenhalters 7. In den aus gleitfähigem Kunststoff bestehenden Einsatzteilen 54 des Metall-Chassis 56 des Gehäuses 55 der Transporteinrichtung 10 ist eine Führungsschiene 78 für den Plattenhalter 7 ausgebildet. Dieser Führungsschiene 78 liegt außenseitig am Tragarm 77 eine aus gleitfähigem Kunststoff bestehende weitere Führungsschiene 79 für den Plattenhalter 7 gegenüber. Mittig trägt die außenseitige Führungsschiene 79 ein Federelement 109, das in einen entsprechenden Einschnitt 110 des Plattenhalters 7 eingreift. Die Oberseite des Tragarms 77 ist als in sich geschlossene Abdeckung 80 für den darunterliegenden Plattenhalter 7 mit zugehöriger Platte 1 ausgeführt. Die Abdeckung 80 dient als Staubschutz. Im Bereich der von dem Plattenhalter 7 aufgenommenen Platte 1 ist die Abdeckung 80 zur Beobachtung der Platte 1 als durchsichtige Scheibe 81 ausgebildet. Durch die Scheibe 81 verläuft der Lichtstrahl eines als Lichtschranke ausgebildeten, ortsfesten Sensors zur Feststellung des tatsächlichen Vorhandenseins einer Platte 1 in dem Plattenhalter 7.

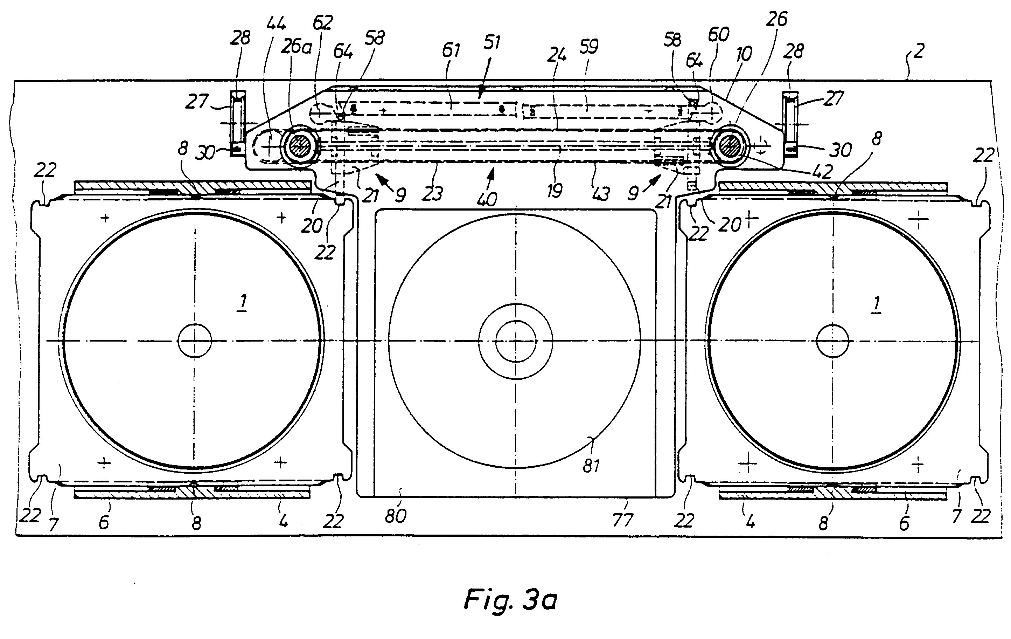

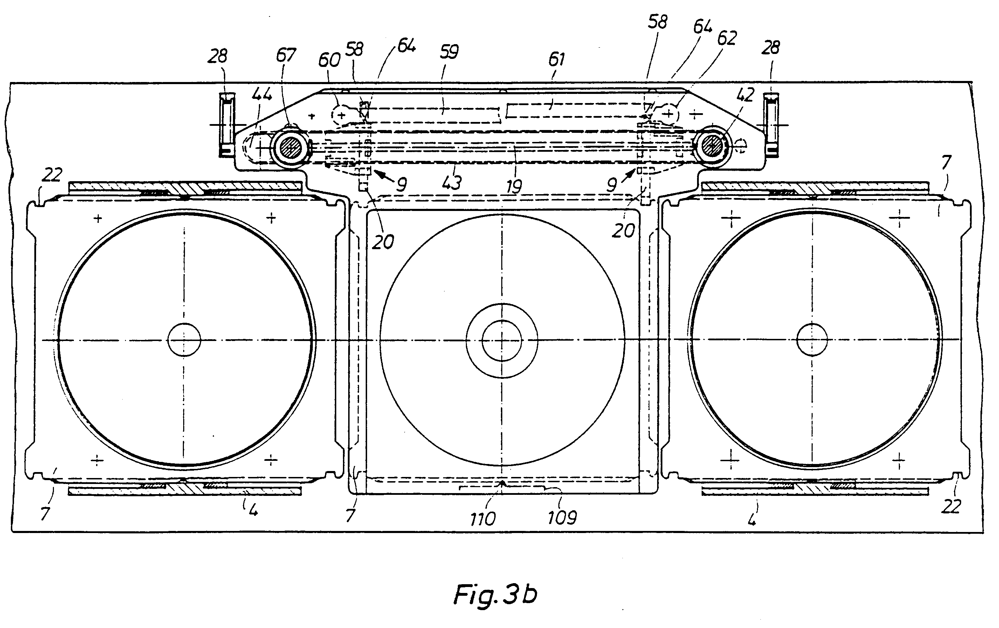

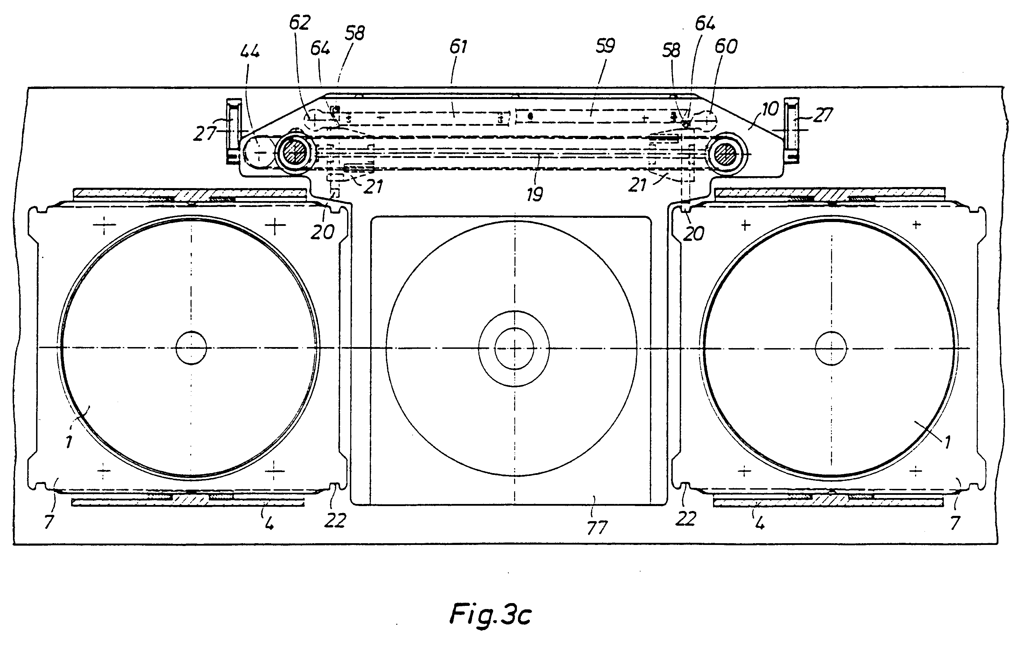

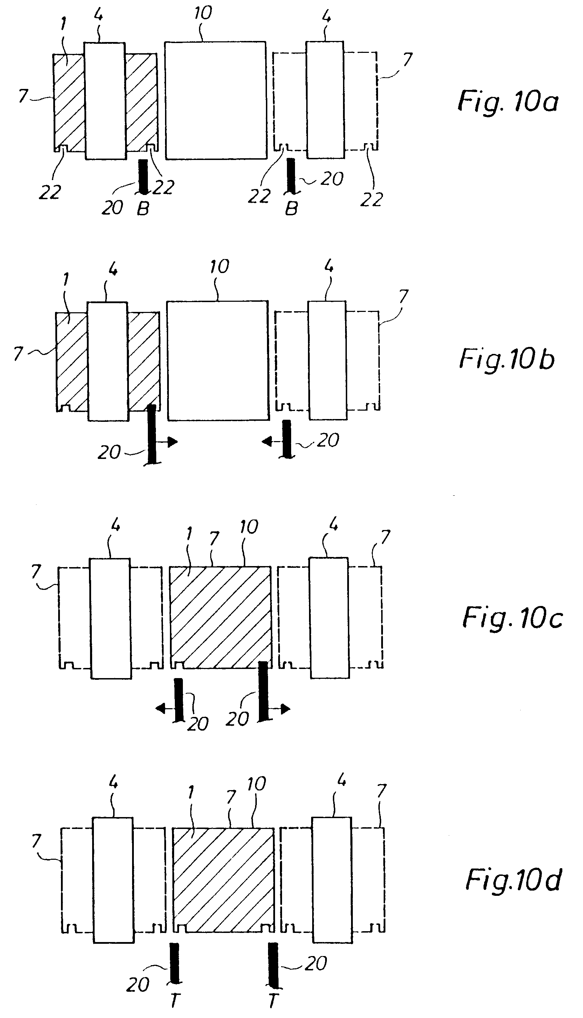

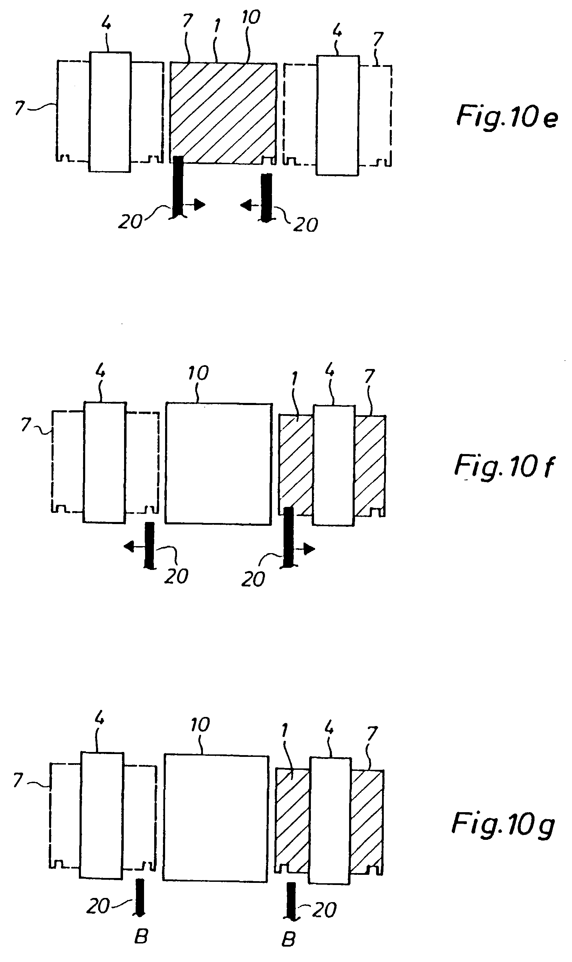

Soll beispielsweise ein im rechten Plattenmagazin 4 aufbewahrter Plattenhalter 7 mit eingelegter Platte 1 in einer Ebene zu dem gegenüberliegenden linken Plattenmagazin 4 befördert werden, dann fährt die Transporteinrichtung 10 aus ihrer Ausgangsstellung auf eine Höhe, die mit der Höhe des Aufnahmefaches 6 des rechten Plattenmagazins 4 übereinstimmt, in welchem der Plattenhalter 7 mit der zu befördernden Platte liegt. In dieser Position der Transporteinrichtung 10 befinden sich die Greifschieber 20 der Schlitten 21 der Auszugeinrichtungen 9 in der Bereitschaftsposition (vergl. Fig. 10a). Dann wird der Greifschieber 20, der dem Plattenhalter 7 mit der eingelegten Platte 1 zugeordnet ist, mit der entsprechenden Ausnehmung 22 des Plattenhalters 1 in Eingriff gebracht (vergl. Fig. 10b und Fig. 3a). Anschließend führen beide Greifarme 20 eine synchrone gegenläufige Bewegung solange aus, bis der Plattenhalter 7 mit der Platte 1 seine Endposition in der Transporteinrichtung 10 erreicht hat (vergl. Fig. 10c und Fig. 3d). Anschließend wird der mit dem Plattenhalter 7 in Eingriff stehende Greifschieber 20 außer Eingriff mit dem Plattenhalter 7 gebracht, wodurch sich nun beide Greifschieber 20 in der Transporteinrichtungsposition befinden (vergl. Fig. 10d). Nunmehr wird der vorhergehend nicht mit dem Plattenhalter 7 in Eingriff gebrachte Greifschieber 20 aus seiner Transporteinrichtungsposition in eine Eingriffsposition mit der zugewandten Ausnehmung 22 des Plattenhalters 7 gebracht (vergl. Fig. 10e). Jetzt führen die Greifschieber 20 wiederum eine gegenläufige synchrone sich kreuzende Bewegung solange aus, bis der Plattenhalter 7 mit der Platte 1 seine Endposition im linken Plattenmagazin 4 erreicht hat (vergl. Fig. 10f und Fig. 3c). Daraufhin wird dieser Greifschieber 20 aus dem Plattenhalter 7 herausgefahren, wodurch sich nunmehr beide Greifschieber 20 wieder in der Bereitschaftsposiiton zur Herausnahme eines Plattenhalters 7 aus einem der Plattenmagazine 4 befinden (vergl. Fig. 10g). In entsprechend analoger Weise laufen die Bewegungsabläufe bei den anderen möglichen Transportwegen des Plattenhalters 7 mit einer Platte 1 ab, beispielsweise von einem Plattenmagazin 4 zu einem Laufwerk 5 oder von dem Platten-Lade-/Ausgabe-Schubfach 11 zu einem Plattenmagazin.

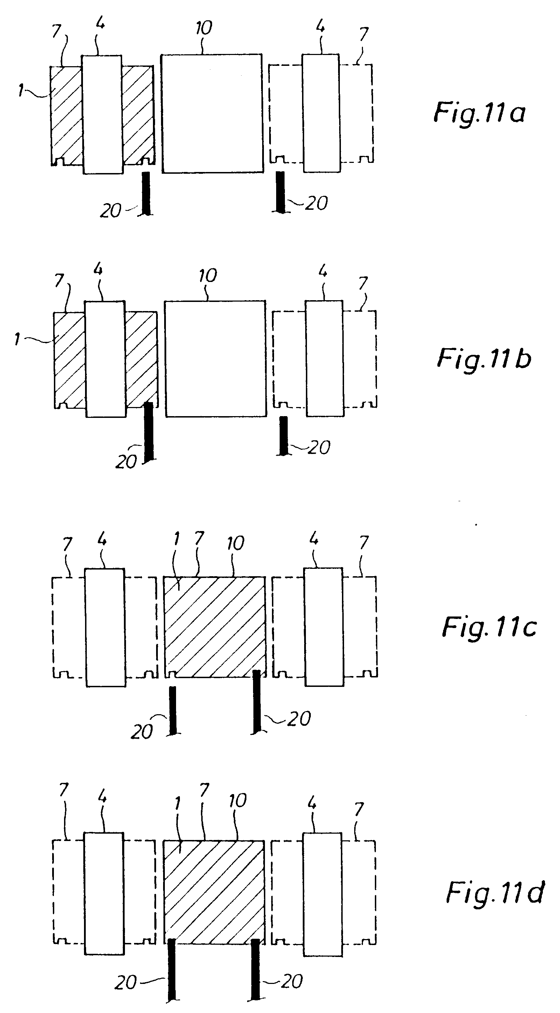

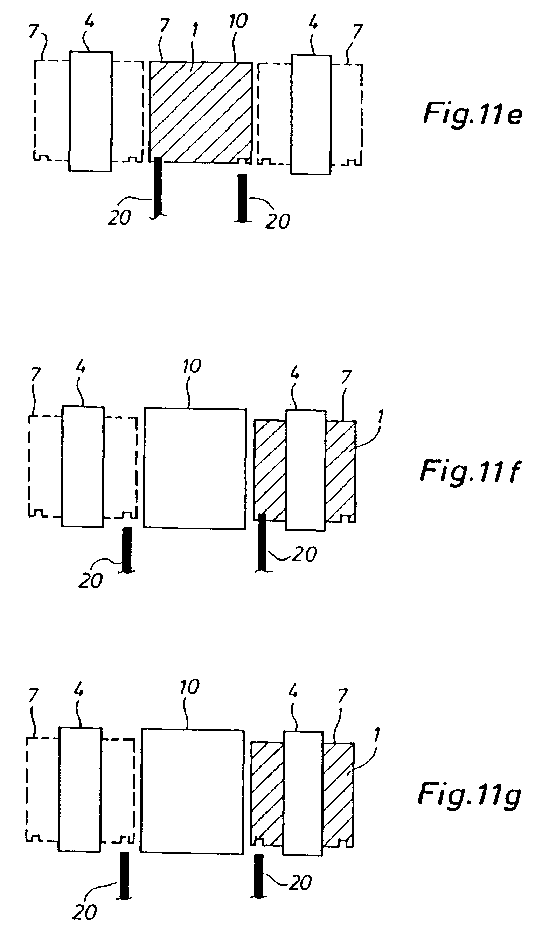

Bei einer entsprechend anderen konstruktiven Auslegung der Kulissensteuerung 51 können beim Durchwechseln eines Plattenhalters 7 mit eingelegter Platte 1 von dem rechten Plattenmagazin 4 zu dem linken Plattenmagazin 4 folgende Schritte nacheinander ablaufen: Der dem rechten Plattenmagazin 4 zugeordnete Greifschieber 20 wird aus der Bereitschaftsposition (vergl. Fig. 11a) mit dem in diesem Plattenmagazin 4 ausgewählten Plattenhalter 7 mit der zugehörigen Platte in Eingriff gebracht (vergl. Fig. 11b). Dann führen die Greifschieber 20 solange eine gegenläufige synchrone Bewegung aus, bis der Plattenhalter 7 mit der Platte 1 seine Endposition in der Transporteinrichtung 10 erhalten hat (vergl. Fig. 11c). Anschließend wird auch der andere Greifschieber 20 mit dem Plattenhalter 7 in eine Eingriffposition mit dem Plattenhalter 7 überführt (vergl. Fig. 11d). Anschließend wird der zuerst mit dem Plattenhalter 7 in Eingriff gebrachte Greifschieber 20 mit dem Plattenhalter 7 außer Eingriff gebracht (vergl. Fig. 11e). Nunmehr führen die Greifschieber 20 wieder eine gegenläufige sich kreuzende Bewegung aus und zwar solange, bis der Plattenhalter 7 mit der Platte 1 seine Endposition im linken Plattenmagazin erhalten hat (vergl. Fig. 11f). Dann wird der rechte Greifschieber 20 mit dem Plattenhalter 7 außer Eingriff gebracht, wodurch beide Greifschieber 20 wieder ihre Bereitschaftsposition einnehmen (vergl. Fig. 11g). In diesem Falle ist also beim Transport des Plattenhalters 7 immer ein Greifschieber 20 mit dem Plattenhalter 7 in Eingriff.

## Patentansprüche

1. Wiedergabe- und/oder Aufzeichnungs- und/oder Ausgabegerät für als Informationsträger ausgebildete Platten (1), insbesondere CD-Platten, mit
- gegenüberliegenden Plattenmagazinen (4), die in horizontal übereinanderliegenden Aufnahmefächern (6) Plattenhalter (7) für mindestens eine Platte (1) aufnehmen,
- einer zwischen den Plattenmagazinen (4) angeordneten, rechnergesteuerten Transporteinrichtung (10) zur wahlweisen Hin- und Herbeförderung eines einzelnen Plattenhalters (7) mit der Platte (1) zwischen beliebigen Aufnahmefächern (6), zwischen einem Aufnahmefach (6) und mindestens einem Laufwerk (5) zum Auslesen oder Einschreiben von Informationen von der bzw. auf die Platte (1) oder zwischen einem Aufnahmefach (6) oder einem Laufwerk (5) und einem Platten-Lade/Ausgabe-Schubfach (11), und
- zwei auf der Transporteinrichtung (10) horizontal verfahrbaren Auszugeinrichtungen (9) für die Plattenhalter (7),
dadurch gekennzeichnet, daß der Freiraum zwischen den Plattenhaltern (7) in jedem Plattenmagazin (4) kleiner als die Dicke einer Platte (1) ist.

2. Wiedergabe- und/oder Aufzeichnungs- und/oder Ausgabegerät für als Informationsträger ausgebildete Platten nach Anspruch 1, dadurch gekennzeichnet, daß die Dicke eines jeden Plattenhalters (7) nur geringfügig größer als die Dicke einer Platte (1) ist.

3. Wiedergabe- und/oder Aufzeichnungs- und/oder Ausgabegerät für als Informationsträger ausgebildete Platten nach Anspruch 1 oder 2, dadurch gekennzeichnet, daß der Plattenhalter (7) an seinen Längsseiten jeweils im vorderen Bereich eine Ausnehmung (22) besitzt, und daß entsprechend der Lage des Plattenhalters (7) im Aufnahmefach (6) des jeweiligen Plattenmagazins (4) bzw. in der Transporteinrichtung (10) der Greifschieber (20) der entsprechenden Auszugeinrichtung (9) mit einer dieser Ausnehmungen (22) in Eingriff bringbar ist.
